# EUROPÄISCHE PATENTSCHRIFT

(11) **EP 4 116 280 B1**
(45) Veröffentlichungstag und Bekanntmachung des Hinweises auf die Patenterteilung: **02.07.2025**
(21) Anmeldenummer: 22183273.6
(22) Anmeldetag: 06.07.2022
(51) Int. Cl.: C05F 3/00, C05F 3/06, C05F 5/00, C05F 17/10, C05F 17/80, C09K 17/52

(54) **VERFAHREN UND ANORDNUNG ZUR HERSTELLUNG EINES TORFERSATZSTOFFES AUS EINER FASERSTOFFSUSPENSION**
METHOD AND ASSEMBLY FOR PRODUCING A PEAT SUBSTITUTE FROM A SUSPENSION OF FIBROUS MATERIAL
PROCÉDÉ ET DISPOSITIF DE PRODUCTION D'UN SUCCÉDANÉ DE TOURBE À PARTIR D'UNE SUSPENSION DE MATIÈRE FIBREUSE

(30) Priorität: 08.07.2021 DE 102021117656
(43) Veröffentlichungstag der Anmeldung: 11.01.2023
(73) Patentinhaber: Geltz Umwelttechnologie GmbH, 75417 Mühlacker (DE)
(72) Erfinder: Geltz, Fabian, 75417 Mühlacker (DE); Geltz, Ulrich, 75223 Niefern-Öschelbronn (DE)
(74) Vertreter: Wacker, Jost Oliver

(56) Entgegenhaltungen:
- EP-A1- 3 696 142
- DE-A1- 10 131 347
- DE-A1- 102011 010 329
- DE-A1- 102012 007 900

## Beschreibung

Die Erfindung betrifft ein Verfahren zur Herstellung eines Torfersatzstoffes aus einer Faserstoffsuspension, die Fasern aus nachwachsenden Rohstoffen enthält, wie insbesondere eine landwirtschaftliche Reststoffe enthaltende Faserstoffsuspension, wie beispielsweise Gülle und/oder Gärrest, nach dem Oberbegriff des Anspruchs 1, sowie eine Anlage nach dem Oberbegriff des Anspruchs 9 zur Durchführung des Herstellungsverfahrens.

Bei dem Herstellungsverfahren wird dabei in wenigstens einem ersten Feststoffabtrennungsschritt eine erste Feststofffraktion von einem ersten Filtrat und einem diesem nachgeschalteten zweiten Feststoffabtrennungsschritt eine zweite Feststofffraktion von einem zweiten Filtrat der Faserstoffsuspension abgetrennt, wobei zwischen beiden Feststoffabtrennungsschritten eine zusätzliche Verflüssigung vorgesehen sein kann. Die hieraus gewonnene Feststofffraktion wird dann in einem Hygienisierungsschritt beispielsweise mit erhöhter Temperatur thermisch behandelt. Nach Durchführung dieser Hygienisierung wird ein Torfersatzstoff bereitgestellt, der als Bodenverbesserer im Gartenbau und/oder in der Landwirtschaft verwendet werden kann. Im Laufe des Herstellungsverfahrens wird zudem in einem Säuerungsschritt eine Säure in die Faserstoffsuspension gegeben, um deren Eigenschaften beziehungsweise Zusammensetzung zu verbessern. Dabei wird die Säure der Faserstoffsuspension bereits vor den beiden Feststoffabtrennungsschritten zugegeben, um vor der Feststoffabtrennung eine Ansäuerung der Faserstoffsuspension vorzunehmen und dadurch ausgefallene Salze der Faserstoffsuspension zu lösen. Durch dieses Lösen von Salzen ist es insbesondere auch bei der Verwendung eines landwirtschaftlichen Reststoffes als Ausgangsstoff möglich, den relativ hohen Salzgehalt von üblicherweise über 5 g/l auf ein für einen vollwertigen Torfersatz geeignetes Maß von maximal 1,5 g/l zu reduzieren. Gleichzeitig wird durch die den beiden Feststoffabtrennungen vorangehende Ansäuerung eine besonders effektive Rückgewinnung von sonstigen verwertbaren Inhaltsstoffen, wie insbesondere Phosphat, Kalium und Brauchwasser aus dem bei den Feststoffabtrennungen anfallenden Filtrat ermöglicht. Dabei wird nach dem Ansäuerungsschritt im ersten Feststoffabtrennungsschritt die erste Feststofffraktion von einem ersten Filtrat mit den darin gelösten Salzen getrennt, um die insbesondere organische Feststofffraktion der weiteren Behandlung zur Herstellung des Torfersatzstoffes und das erste Filtrat einer weiteren Behandlung zur Gewinnung weiterer verwertbarer Stoffe zuzuführen. Die Feststoffabtrennung erfolgt hierbei bevorzugterweise durch Verwendung einer Schneckenpresse, einer Winkelpresse, einem Wendelfilter und/oder durch eine andere bekannte und geeignete Vorrichtung. Zudem erfolgt nach dem ersten Feststoffabtrennungsschritt ein Waschungsschritt, bei dem die erste Feststofffraktion mit Spülwasser vermischt wird, um die nach dem ersten Feststoffabtrennungsschritt noch in der Feststofffraktion enthaltenen Salze gegebenenfalls auszuspülen. Durch das Verfahren werden die Eigenschaften der Fasern aus der Faserstoffsuspension chemisch und biologisch so angepasst, dass sie torfähnlich verwendet werden können. Dabei wird die makroskopische fasrige Struktur der Faserstoffe im Wesentlichen beibehalten, da diese für die Verwendung als Torfersatzstoff notwendig ist.

Aus DE10121237A1 ist ein Verfahren zur Verbesserung von als Bodenhilfsstoffe verwendbare Torfersatzstoffen bekannt. Bei diesem wird eine zellulosefaserhaltige Suspension, die beispielsweise Holzfasern enthält, zunächst gesiebt und anschließend in einer Eindickvorrichtung behandelt. Anschließend erfolgt in einer Flockiervorrichtung die Zugabe von Substanzen, wie beispielsweise einer Säure, um das Wachstum von Mikroorganismen zu hemmen, die in der Suspension enthalten sind. Anschließend erfolgt eine thermische Behandlung mittels eines Trockners, durch den der Bodenhilfsstoff in Form eines Trockenstoffes gewonnen wird.

EP3696142A1 beschreibt ein Verfahren zur Gewinnung von Phosphor und torfartiger Substanz aus einem organischen Material, wie beispielsweise aus landwirtschaftlichen Abfällen in Form von Gülle oder Abwasserschlamm. Dabei ist neben einer Ansäuerung und zwei Feststoffabtrennungsschritten wenigstens ein Waschungsschritt und eine thermische Behandlung des phosphorhaltigen Materials vorgesehen.

DE102012007900A1 beschreibt ein Verfahren zur Reduktion des Nährstoffgehalts in organischen Abfallstoffen, bei dem der organische Abfallstoff mit einem verflüssigten Gas gewaschen wird. Dadurch ist ein Trockenvorgang nach dem Waschprozess nicht erforderlich, da die im gewaschenen Gärrest verbliebenen Rückstände an verflüssigtem Gas nach Druckentlastung in den gasförmigen Zustand übergehen und ausdampfen. Das erhaltene organische Substrat kann dabei beispielsweise als Torfersatz verwendet werden.

DE10131347A1 zeigt ein Verfahren zur Verbesserung von als Bodenhilfsstoffe verwendbare Torfersatzstoffe, bei dem Substanzen zugegeben werden, welche Säuren und Salze enthalten oder im Torfersatzstoff Säuren oder Salze bilden.

DE102011010329A1 beschreibt die Herstellung und Anwendung eines Wasser speichernden und abgebenden organisch basierten Kompositmaterials. Das Kompositmaterial enthält hierbei mindestens ein natürliches und/oder synthetisches Superabsorber-Polymer, das als Hydrogel-Komposit ausgebildet ist.

Nachteilig an den bekannten Verfahren zur Herstellung eines Torfersatzstoffes aus einer Faserstoffsuspension ist der durch den Waschungsschritt verursachte Wasserverbrauch.

Die Aufgabe der Erfindung ist es, bei einem gattungsgemäßen Herstellungsverfahren die genannten Nachteile zu vermeiden und einen vollwertigen Torfersatz zur Verfügung zu stellen sowie insbesondere im Falle der Verwendung von landwirtschaftlichen Reststoffen als Ausgangsstoff eine möglichst weitestgehende Verwertung der enthaltenen Inhaltsstoffe zu ermöglichen und einen wirtschaftlichen Spülvorgang zu gewährleisten.

Diese Aufgabe wird durch ein Herstellungsverfahren mit den Merkmalen des Anspruchs 1 gelöst. Dabei wird das im ersten Feststoffabtrennungsschritt anfallende erste Filtrat in einem Aufbereitungsablauf aufbereitet und im Waschungsschritt als Spülwasser verwendet, wodurch der Wasserverbrauch durch das Verfahren insgesamt deutlich reduziert werden kann. Zudem wird die gewonnene Feststofffraktion in einem den Feststoffabtrennungsschritten nachgeschalteten Hygienisierungsschritt behandelt, wie beispielsweise durch Dampf und/oder Heißluft, oder einer Kompostierung zugeführt.

Vorteilhafterweise wird beim Ansäuerungsschritt ein pH-Wert der Faserstoffsuspension von 4 bis 6, vorzugsweise 5 bis 6, eingestellt, bei dem ein besonders effektives Lösen der ausgefallenen beziehungsweise der an den Fasern der Faserstoffsuspension anhaftenden Salze ermöglicht. Zudem kann hierdurch auch eine Verringerung von Ammoniakausgasungen erreicht werden.

Dabei ist es günstig, wenn die Säure beim Ansäuerungsschritt durch Schwefelsäure gebildet ist, um eine sichere und kostengünstige Verfügbarkeit der für das Verfahren verwendeten Säure gewährleisten zu können.

Dabei wird die Feststofffraktion im Waschungsschritt vorzugsweise mit der 2 bis 4-fachen Masse an Spülwasser vermischt, um einen ausreichend effektiven und gleichzeitig wirtschaftlichen Spülvorgang gewährleisten zu können.

Zudem ist es günstig, wenn nach dem Waschungsschritt im zweiten Feststoffabtrennungsschritt die salzreduzierte zweite Feststofffraktion von dem zweiten Filtrat getrennt wird, das im Wesentlichen aus dem Spülwasser besteht. Die Feststoffabtrennung erfolgt auch in diesem zweiten Feststoffabtrennungsschritt bevorzugterweise durch Verwendung einer Schneckenpresse, einer Winkelpresse, einem Wendelfilter und/oder durch eine andere bekannte und geeignete Vorrichtung Hierdurch kann eine besonders effektive Trennung der noch enthaltenen Salze von der zweiten Feststofffraktion beziehungsweise von den für die Herstellung des Torfersatzes benötigten Fasern gewährleistet werden, wobei auch das zweite Filtrat zur Gewinnung wiederverwertbarer Stoffe herangezogen werden kann. Hierbei ist insbesondere eine Aufbereitung des zweiten Filtrats dahingehend möglich, dass dieses anschließend erneut als Spülwasser wiederverwendet werden kann.

Vorteilhafterweise erfolgt nach dem zweiten Feststoffabtrennungsschritt der Hygienisierungsschritt, bei dem die salzreduzierte zweite Feststofffraktion einer thermischen Behandlung unterzogen wird. Hierdurch können in der Faserstoffsuspension enthaltene Keime und Krankheitserreger abgetötet und eine Denaturierung von Hormonen und Medikamenten erzielt werden.

Hierzu wird die salzreduzierte zweite Feststofffraktion, bevorzugterweise nach einer Vortrocknung, im Hygienisierungsschritt einer Dampf- oder Heißlufthygienisierung unterzogen. Hierdurch können in der Feststofffraktion enthaltene Keime und Krankheitserreger besonders effektiv abgetötet werden.

In einer bevorzugten Ausführungsform des Verfahrens wird die Faserstoffsuspension vor der Ansäuerung und den beiden Feststoffabtrennungsschritten zudem einer Vorabtrennung mit einem zusätzlichen Separator und gegebenenfalls einer Voranmischung der vorabgetrennten Feststoffe mit Wasser unterzogen. Auf diese Weise kann ein bereits vorabgetrennter landwirtschaftlicher Reststoff der Ansäuerung und den beiden Feststoffabtrennungsschritten zugeführt werden, wodurch der Transportaufwand bis zur Behandlung durch das erfindungsgemäße Verfahren deutlich reduziert werden kann.

Dabei ist es günstig, wenn das erste Filtrat im Aufbereitungsablauf mittels Umkehrosmose behandelt wird. Durch diese Behandlung kann aus dem ersten Filtrat ein aufbereitetes Brauchwasser gewonnen werden, das beispielsweise als Spülwasser verwertbar ist oder direkt eingeleitet werden kann. Das bei der Umkehrosmose ferner anfallende Retentat weist dabei zudem einen relativ hohen Kaliumgehalt auf, so dass auch dieses als weiterer verwertbarer Inhaltsstoff gewonnen werden kann. Hierdurch kann der Verwertungsgrad der als Ausgangsstoff dienenden Faserstoffsuspension weiter erhöht werden.

Zudem wird das erste Filtrat im Aufbereitungsablauf vor der Umkehrosmose durch eine Hydroxidfällung behandelt, durch die Härtebildner wie Ca, Mg und/oder Phosphate ausgefällt werden können. Hierdurch können auch diese Inhaltsstoffe einer Verwertung zugeführt werden, wie insbesondere die gewonnenen Phosphatsalze, die als Phosphatdünger verwertet werden können.

Vorteilhafterweise wird das erste Filtrat im Aufbereitungsablauf zwischen der Hydroxidfällung und der Umkehrosmose auf etwa pH 5 nachgesäuert. Hierdurch kann das Ammonium-Ammoniak-Gleichgewicht hin zum Ammonium verschoben werden, das bei der Umkehrosmose im Wesentlichen vollständig abgetrennt werden kann, während Ammoniak nur zum Teil zurückgehalten werden kann.

Zudem ist es günstig, wenn das erste Filtrat im Aufbereitungsablauf vor der Nachsäuerung zur Abtrennung von Stickstoff-Nebenprodukten, wie insbesondere Ammoniumsulfat, Ammoniumnitrat und/oder Ammoniumformiat, gestrippt wird, um weitere verwertbare Inhaltsstoffe gewinnen zu können. Dabei werden bei diesem Strippungsschritt insbesondere Stickstoffverbindungen in Form von Ammoniak aus dem Filtrat gestrippt und durch eine saure Gaswäsche mit Schwefelsäure in Form einen Ammoniumsulfatlösung ausgegeben.

Ferner wird die oben genannte Aufgabe durch eine Anlage zur Durchführung des Verfahrens zur Herstellung eines Torfersatzstoffes aus einer Faserstoffsuspension in einer der oben beschriebenen Ausführungsformen gelöst. Diese weist hierzu eine erste Feststoffabtrennungsstufe zur Durchführung des ersten Feststoffabtrennungsschrittes, eine zweite Feststoffabtrennungsstufe zur Durchführung des zweiten Feststoffabtrennungsschrittes und eine der zweiten Feststoffabtrennungsstufe nachgeschaltete Hygienisierungsstufe zur Durchführung des Hygienisierungsschrittes auf. Dabei ist vorgesehen, dass vor der ersten Feststoffabtrennungsstufe eine Ansäuerungsstufe mit einer Mischeinrichtung zum Vermischen der Faserstoffsuspension mit einer Säure vorgesehen ist. Durch die Mischeinrichtung der Ansäuerungsstufe kann dabei gewährleistet werden, dass die Faserstoffsuspension weitestgehend vollständig und relativ gleichmäßig mit der eingegebenen Säure vermischt wird und dadurch die im Ausgangsstoff enthaltenen Salze möglichst vollständig gelöst werden. Dabei ist der ersten Feststoffabtrennungsstufe eine Waschungsstufe zur Durchführung des Waschungsschrittes nachgeschaltet. Dadurch erfolgt nach dem ersten Feststoffabtrennungsschritt der Waschungsschritt, bei dem die erste Feststofffraktion mit Spülwasser vermischt wird, um die nach dem ersten Feststoffabtrennungsschritt noch in der Feststofffraktion enthaltenen Salze gegebenenfalls auszuspülen. Dabei ist die erste Feststoffabtrennungsstufe zudem mit einer Aufbereitungsanordnung verbunden, über die das Filtrat aufbereitbar ist. Auf diese Weise kann der Waschungsschritt mit aufbereitetem Spülwasser durchgeführt werden, das wenigstens teilweise aus dem ersten Filtrat der ersten Feststoffabtrennungsstufe gewonnen wird. Hierdurch kann der Frischwasserverbrauch der Herstellungsanlage deutlich reduziert werden.

Bevorzugterweise ist die Mischeinrichtung dabei durch einen Rührbehälter und/oder ein Rohr mit Turbulenzerzeugungsmitteln gebildet, um ein möglichst gleichmäßiges Durchmischen der Faserstoffsuspension mit der Säure zu gewährleisten. Unabhängig von der Art der Mischeinrichtung ist dabei vorteilhafterweise eine pH-Überwachung vorgesehen, über die eine geeignete Mengeneingabe der Säure gesteuert oder geregelt werden kann.

Ferner weisen die erste Feststoffabtrennungsstufe und die zweite Feststoffabtrennungsstufe vorzugsweise jeweils eine Schneckenpresse, eine Winkelpresse und/oder einen Wendelfilter auf, um eine sichere Abtrennung der Feststofffraktion gewährleisten zu können.

Zudem ist es günstig, wenn die Hygienisierungsstufe eine Dampfhygienisierungseinrichtung und/oder eine Heißlufthygienisierungseinrichtung aufweist. Durch beide Einrichtungen kann dabei eine vollständige thermische Behandlung der Feststofffraktion gewährleistet werden, die wiederum eine ausreichende Abtötung von Keimen und Krankheitserregern sowie eine ausreichende Denaturierung von Hormonen und Medikamenten sicherstellt, um den gewonnen Torfersatz ohne weitere Behandlung im Gartenbau oder in der Landwirtschaft einsetzen zu können. Alternativ oder zusätzlich zur thermischen Behandlung kann die Feststofffraktion auch durch eine Kompostierung hygienisiert werden.

In einer besonders bevorzugten Ausführungsform ist den beiden Feststoffabtrennungsstufen eine Vorabtrennungseinrichtung zur Durchführung der Vorabtrennung und vorzugsweise eine Voranmischungseinrichtung zur Durchführung einer Voranmischung vorgeschaltet. Hierbei kann die Vorabtrennungseinrichtung beispielsweise örtlich entfernt von der eigentlichen Behandlungsanlage durch einen oder mehrere Separator(en) gebildet sein, wie beispielsweise in einem landwirtschaftlichen Betrieb. An diesem wenigsten einen Separator wird dabei vorab die Feststofffraktion abgetrennt, um den Transportaufwand zur eigentlichen Herstellungsanlage zu reduzieren. An dieser kann die angelieferte Feststofffraktion dann gegebenenfalls mit einer vorbestimmten Menge an Wasser zu der zu behandelnden Faserstoffsuspension angemischt werden oder direkt als Ausgangsstoff verwendet werden.

Dabei ist es günstig, wenn die Aufbereitungsanordnung eine Umkehrosmoseeinrichtung aufweist, durch die neben der Rückgewinnung von gereinigtem Wasser weitere verwertbare Nebenprodukte gewonnen werden können, wie beispielsweise Kalium. Zum Schutz der Umkehrosmoseeinrichtung kann dabei zur Rückhaltung von Feststoffpartikeln eine Mikrofiltrationseinrichtung vorgeschaltet sein. Bedarfsweise kann zwischen dieser Mikrofiltrationseinrichtung und der Umkehrosmoseeinrichtung zudem eine Nanofiltration zur Rückhaltung von feinen organischen Stoffen und einem Teil der härtebildenden Ionen vorgesehen sein.

Alternativ oder zusätzlich hierzu kann der Umkehrosmoseeinrichtung eine Hydroxidfällungseinrichtung vorgeschaltet sein, durch die insbesondere die Härtebildner Calcium und Magnesium ausgefällt werden können. Die Fällung erfolgt dabei vorzugsweise in einem Rührbehälter, dem eine übliche Sedimentationseinrichtung nachgeschaltet ist, wie beispielsweise ein Absetzbecken ein Schrägklärer oder ähnliches. Das hierbei gewonnene Sediment kann dann anschließend beispielsweise via Kammerfilterpresse, Bandfilter und/oder Trommelfilter filtriert werden.

Vorteilhafterweise ist zwischen der Hydroxidfällungseinrichtung und der Umkehrosmoseeinrichtung zudem eine Nachsäuerungsstufe zur pH-Absenkung des Filtrats angeordnet, um das Ammonium-Ammoniak-Gleichgewicht zum Ammonium zu verschieben, und dadurch den Wirkungsgrad der Umkehrosmose zu erhöhen.

In der Aufbereitungsanordnung ist dabei zudem eine Strippungseinrichtung zur Abtrennung der Stickstoff-Nebenprodukte vor der Nachsäuerungsstufe angeordnet. Dabei werden beim Strippungsschritt insbesondere Stickstoffverbindungen in Form von Ammoniak aus dem Filtrat gestrippt und durch eine saure Gaswäsche mit Schwefelsäure behandelt. Durch diese vor der Ansäuerung angeordnete Strippung können insbesondere Ammoniumsulfat, Ammoniumnitrat und Ammoniumformiat abgetrennt werden.

Der durch das Herstellungsverfahren in einer der oben genannten Ausführungsformen gewonnene Torfersatzstoff weist vorteilhafterweise einen Salzgehalt von 0,5 bis 1,5 g/l, einen Phosphatgehalt von 0,3 bis 0,6 g/l und einen Stickstoffgehalt von 0,05 bis 0,15 g/l sowie ferner vorzugsweise einen Kaliumgehalt von 0,3 bis 0,6 g/l auf. Hierdurch ist der durch das beschriebene Herstellungsverfahren und die beschriebene Anlage herstellbare Torfersatzstoff ausreichend salz- beziehungsweise nährstoffarm, um im Gartenbau und in der Landwirtschaft auch ohne weitere Behandlungsmaßnahme als Bodenverbesserer eingesetzt werden zu können. Der Stickstoffgehalt kann dabei durch die Menge des zugegebenen Suspendierungs- und Waschwassers eingestellt werden. Der Salz- und Phosphatgehalt kann zusätzlich durch die Wahl des pH-Werts im Ansäuerungsschritt eingestellt werden. Umso mehr Salz und Phosphat gelöst wird, desto niedriger wird dabei im Allgemeinen der pH-Wert im angegebenen Spektrum angesetzt.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

In den Figuren ist eine beispielhafte Ausführungsform der Erfindung dargestellt. Es zeigen:
- Figur 1: einen schematischen Aufbau einer Anlage zur Durchführung eines erfindungsgemäßen Verfahrens zur Herstellung eines Torersatzes,
- Figur 2: einen alternativen Aufbau der Anlage zur Durchführung des erfindungsgemäßen Verfahrens und
- Figur 3: einen weiteren, alternativen Aufbau der Anlage zur Durchführung des erfindungsgemäßen Verfahrens.

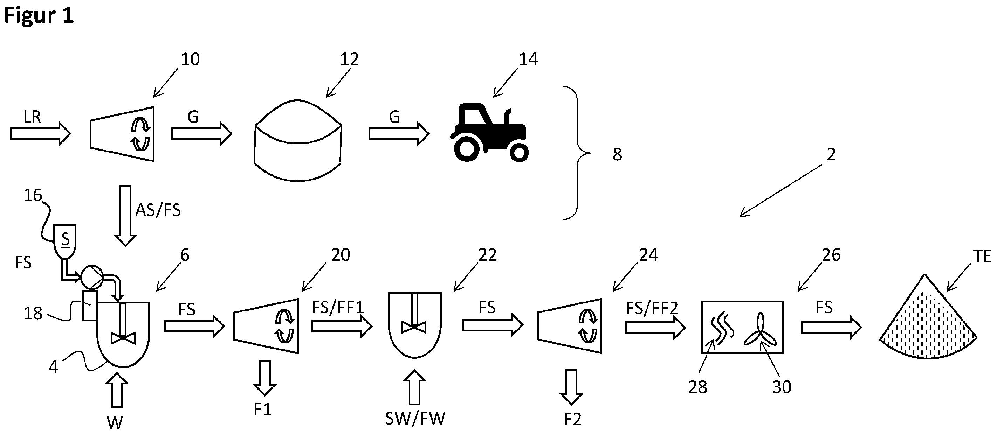

Wie aus Figur 1 zu entnehmen ist, wird bei der hierin dargestellten Anlage 2 eine als Ausgangsstoff AS dienende Faserstoffsuspension FS, die Fasern aus nachwachsenden beziehungsweise pflanzlichen Rohstoffen enthält, in eine Mischeinrichtung 4 einer Ansäuerungsstufe 6 gegeben. Die Faserstoffsuspension FS enthält vorzugsweise landwirtschaftliche Reststoffe LR, wie Gülle und/oder Gärreste, oder besteht vollständig aus diesen.

Wie in Figur 1 dargestellt, kann die als Ausgangsstoff AS in die Mischeinrichtung 4 gegebene Faserstoffsuspension FS dabei optional aus einer direkt vorgeschalteten oder örtlich separaten Vorbehandlungsstufe 8 stammen, die beispielsweise eine Vorabtrennungseinrichtung 10 aufweist. Durch diese Vorbehandlungsstufe 8 kann der als Ausgangsstoff AS dienende landwirtschaftliche Reststoff LR insbesondere von einem flüssigen Bestandteil, wie Gülle G; zu einem großen Teil getrennt werden, um den Transportaufwand des landwirtschaftlichen Reststoffes LR zur Ansäuerungsstufe 6 zu verringern und/oder um die Faserstoffsuspension FS in einer für die Behandlung durch die Anlage 2 geeigneten Zusammensetzung bereitzustellen. Hierzu kann der durch die Vorabtrennungseinrichtung 10 behandelte landwirtschaftliche Reststoff LR in der Vorbehandlungsstufe 8 und/oder in der Mischeinrichtung 4 zudem vorab mit Wasser zu einer geeigneten Suspension vermischt werden (nicht dargestellt).

Im Falle der Verwendung der optionalen Vorbehandlungsstufe 8 kann die in der Vorabtrennungseinrichtung 10 abgetrennte Gülle G beispielsweise in ein Güllelager 12 weitergeleitet werden, um sie beispielsweise einer eigenen Behandlung zuführen oder mittels eines entsprechenden Fahrzeugs 14 ausbringen zu können.

In jedem Fall wird der als Ausgangsstoff AS dienenden Faserstoffsuspension FS in der Mischeinrichtung 4 der Ansäuerungsstufe 6 eine Säure S, vorzugsweise in Form von Schwefelsäure zugegeben. Hierzu kann die Säure S über eine Dosiereinrichtung 16, vorzugsweise automatisch gesteuert beziehungsweise geregelt, in die Mischeinrichtung 4 gegeben werden, wie beispielsweise in Abhängigkeit von einer in der Mischeinrichtung 4 vorgesehenen pH-Überwachung 18. Die Mischeinrichtung 4 kann dabei, wie dargestellt, beispielsweise durch einen Rührbehälter gebildet sein. Alternativ hierzu kann die Ansäuerungsstufe 6 zur Durchmischung der Faserstoffsuspension FS mit der Säure S auch ein Rohr mit Turbulenzerzeugungsmitteln aufweisen (nicht dargestellt).

In jedem Fall ist der Ansäuerungsstufe 6 eine erste Feststoffabtrennungsstufe 20 nachgeschaltet, in der ein erstes Filtrat F1 von einer ersten Feststofffraktion FF1 der Faserstoffsuspension FS abgetrennt wird. Hierzu weist die erste Feststoffabtrennungsstufe 20 beispielsweise eine Schneckenpresse, eine Winkelpresse und/oder einen Wendelfilter auf.

Der ersten Feststoffabtrennungsstufe 20 ist wiederum eine Waschungsstufe 22 nachgeschaltet, in der die durch die erste Feststoffabtrennung gewonnene erste Feststofffraktion FF1 der Faserstoffsuspension FS in einem Waschungsschritt mit Spülwasser SW vermischt wird. Bevorzugterweise wird hierbei die erste Feststofffraktion FF1 mit der 2 bis 4-fachen Masse an Spülwasser SW vermischt.

Der Waschungsstufe 22 ist dann eine zweite Feststoffabtrennungsstufe 24 nachgeschaltet, in der ein zweites Filtrat F2 von einer zweiten Feststofffraktion FF2 der im Waschungsschritt gewonnenen, salzreduzierten Faserstoffsuspension FS abgetrennt wird. Hierzu weist auch die zweite Feststoffabtrennungsstufe 24 beispielsweise eine Schneckenpresse, eine Winkelpresse und/oder einen Wendelfilter auf.

Der zweiten Feststoffabtrennungsstufe 24 ist wiederum eine Hygienisierungsstufe 26 nachgeschaltet, in der die durch die zweite Feststoffabtrennung gewonnene zweite Feststofffraktion FF2 der Faserstoffsuspension FS in einem Hygienisierungsschritt thermisch behandelt wird. Hierzu weist die Hygienisierungsstufe 26 beispielsweise eine Dampfhygienisierungseinrichtung 28 zur Beaufschlagung der zweiten Feststofffraktion FF2 mit Dampf und/oder eine Heißlufthygienisierungseinrichtung 30 zur Beaufschlagung der Feststofffraktion FF2 mit Heißluft auf.

Nach dem Hygienisierungsschritt wird auf diese Weise ein Torfersatzstoff TE bereitgestellt, der ohne weitere Behandlung vollwertig im Gartenbau oder in der Landwirtschaft verwendet werden kann. Hierzu läuft das Behandlungsverfahren der Anlage 2 wie folgt ab:
In dem in der Ansäuerungsstufe 6 durchgeführten Ansäuerungsschritt wird die als Ausgangsstoff AS dienende Faserstoffsuspension FS in der Mischeinrichtung 4 mit der Säure S durchmischt. Mittels der Dosiereinrichtung 16 und der pH-Überwachung 18 wird dabei ein pH-Wert der Faserstoffsuspension FS zwischen 4 und 6, vorzugsweise zwischen 5 und 6 eingestellt. Hierdurch werden die im Ausgangsstoff AS enthaltenen, ausgefallenen Salze gelöst.

In der ersten Feststoffabtrennungsstufe 20 werden diese gelösten Salze mit dem ersten Filtrat F1 von der ersten Feststofffraktion FF1 zum großen Teil abgetrennt. Die auf diese Weise bereits salzreduzierte Faserstoffsuspension FS wird dann in dem in der Waschungsstufe 22 durchgeführten Waschungsschritt mit dem Spülwasser durchmischt, in dem sich auch die noch anhaftenden Salze zusätzlich lösen können.

In der zweiten Feststoffabtrennungsstufe 24 wird dann das überwiegend aus dem Spülwasser SW bestehende zweite Filtrat F2 mit den nun hierin gelösten Salzen von der zweiten Feststofffraktion FF2 abgetrennt. Die auf diese Weise weitestgehend salzbefreite Faserstoffsuspension FS wird dann in dem in der Hygienisierungsstufe 26 durchgeführten Hygienisierungsschritt bei Temperaturen von über 80 °C thermisch behandelt, wobei enthaltene Keime und Krankheitserreger abgetötet werden und eine Denaturierung von enthaltenen Hormonen und Medikamenten erfolgt.

Hierdurch weist der durch das Verfahren zur Verfügung gestellte Torfersatzstoff TE nach dem Hygienisierungsschritt einen Salzgehalt von lediglich 0,5 bis 1,5 g/l, einen Phosphatgehalt von 0,3 bis 0,6 g/l, einen Stickstoffgehalt von 0,05 bis 0,15 g/l und einen Kaliumgehalt von 0,3 bis 0,6 g/l auf, wodurch er problemlos und ohne weitere Behandlung im Gartenbau oder in der Landwirtschaft eingesetzt werden kann.

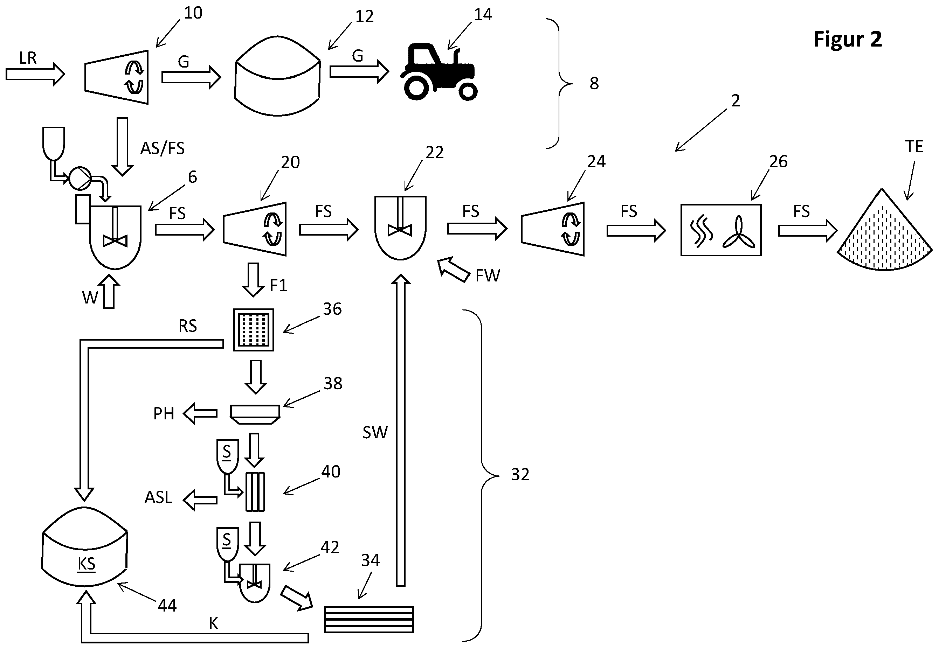

Figur 2 zeigt eine erweiterte Ausführungsform der Anlage 2 nach Figur 1 beziehungsweise des damit durchführbaren Herstellungsverfahrens. Hierbei ist zusätzlich zur oben beschriebenen Vorgehensweise eine Aufbereitungsanordnung 32 zur Durchführung eines Aufbereitungsablaufes vorgesehen. In diesem wird das in der ersten Feststoffabtrennungsstufe 20 erzeugte erste Filtrat F1 derart aufbereitet, dass es in der Waschungsstufe 22 als Spülwasser SW zur Durchführung des Waschungsschrittes verwendet werden kann.

Die Aufbereitungsanordnung 32 weist hierzu eine Umkehrosmoseeinrichtung 34 auf, der eine Mikrofiltration 36 zur Rückhaltung von Feststoffpartikeln und optional eine Nanofiltration zur zusätzlichen Rückhaltung von feinen organischen Stoffen vorgeschaltet sein kann (nicht dargestellt). Im Anschluss hieran ist der Umkehrosmoseeinrichtung 34 eine Hydroxidfällungseinrichtung 38 vorgeschaltet, die beispielsweise einen Rührbehälter mit Sedimentation und Sedimentfiltrierung aufweist. Die Hydroxidfällungseinrichtung 38 dient dabei zur Ausfällung von Härtebildnern wie Calcium und Magnesium sowie zur Gewinnung von Phosphaten in Form von Phosphatsalzen.

Ferner kann die Aufbereitungsanordnung 32 im Anschluss an die Hydroxidfällungseinrichtung 38 eine Strippungseinrichtung 40 aufweisen, mittels der Stickstoff-Nebenprodukte in Form von Ammoniumsulfatlösungen ASL abgetrennt werden können. An der Strippungseinrichtung 40 kann hierzu nach dem Strippungsschritt unter Eingabe der Säure S eine saure Gaswäsche zum Austreiben des Ammoniak-Stickstoffs durchgeführt werden. In Abhängigkeit der gewählten Säure S können dabei Nebenprodukte wie Ammoniumsulfat, Ammoniumnitrat Ammoniumformiat usw. gewonnen werden.

Ferner weist die Aufbereitungsanordnung 32 vor der Umkehrosmoseeinrichtung 34 eine Nachsäuerungsstufe 42 zur pH-Absenkung des zu behandelnden ersten Filtrats F1 auf einen pH-Wert von etwa 5 auf. Hierdurch wird das Ammonium-Ammoniak-Gleichgewicht hin zum Ammonium verschoben, da dieses in der Umkehrosmose vollständiger zurückgehalten werden kann als Ammoniak.

Das durch Umkehrosmoseeinrichtung 34 gereinigte Wasser kann somit als Spülwasser SW für die Waschungsstufe 22 verwendet werden. Sollte hierbei die zur Verfügung stehende Menge des Spülwassers SW aus der Aufbereitungsanordnung 32 nicht ausreichen, kann für den Waschungsschritt zusätzlich Frischwasser FW verwendet werden. Das in der Umkehrosmoseeinrichtung 34 ferner anfallende Umkehrosmosekonzentrat K kann beispielsweise zusammen mit den zurückgehaltenen Stoffen RS der Mikrofiltrationseinrichtung 36 einer gemeinsamen Reststofflagerung 44 zugeführt werden. Der auf diese Weise gelagerte kaliumhaltige Reststoff KS kann dabei beispielsweise als Kaliumdünger verwertet werden.

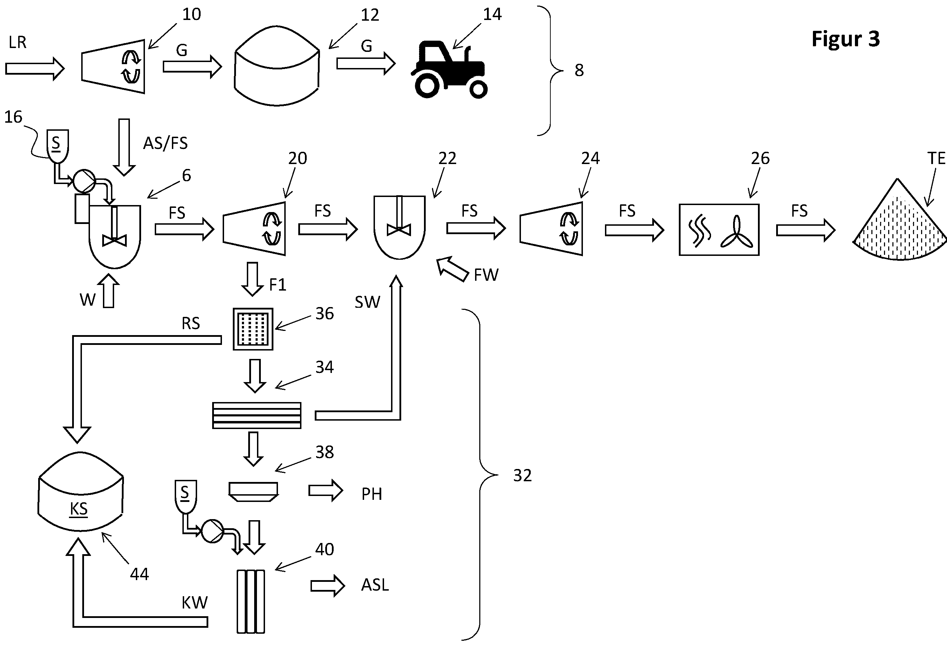

Figur 3 zeigt die Anlage 2 mit einer alternativen Ausführungsform der Aufbereitungsanordnung nach Figur 2, bei der das in der ersten Feststoffabtrennungsstufe 20 erzeugte erste Filtrat F1 2 im Unterschied zum Verfahren nach Figur 2 nach der Mikrofiltrationseinrichtung 36 direkt der Umkehrosmoseeinrichtung 34 zugeführt wird.

Diese Vorgehensweise ist dabei insbesondere dann möglich, wenn die Calciumkonzentration des ersten Filtrats F1 nach der Mikrofiltration 36 und gegebenenfalls einer zusätzlichen Nanofiltration (nicht dargestellt) ausreichend gering ist, so dass bei der Umkehrosmose kein Scaling beziehungsweise keine wesentliche Anlagerung von Partikeln zu erwarten ist. Dies ist insbesondere dann der Fall, wenn der Härtegradbereich des ersten Filtrats F1 möglichst deutlich unter 50°dH liegt.

Im Anschluss an die Umkehrosmoseeinrichtung 34 ist dann die Hydroxidfällungseinrichtung 38 zur Abtrennung von Phosphat aus dem Umkehrosmosekonzentrat vorgesehen, das als Phosphatdünger verwertet werden kann. Anschließend ist die Strippungseinrichtung 40 angeordnet, an der der Strippungsschritt und gegebenenfalls unter Eingabe der Säure S eine saure Gaswäsche zum Austreiben des Ammoniak-Stickstoffs erfolgen kann. In Abhängigkeit der gewählten Säure S können dabei auch hier Nebenprodukte gewonnen werden, wie Ammoniumsulfat, Ammoniumnitrat, Ammoniumformiat usw. Im Übrigen fällt an der Strippungseinrichtung 40 im Wesentlichen Kaliwasser KW an, das in dem entsprechenden Speicher 44 gesammelt und gegebenenfalls einer Weiterbehandlung zugeführt werden kann. Das in der Strippungseinrichtung 40 ferner anfallende Kaliwasser KW kann auch hier zusammen mit den zurückgehaltenen Stoffen RS der Mikrofiltrationseinrichtung 36 einer gemeinsamen Reststofflagerung 44 zugeführt werden. Der hierbei gelagerte kaliumhaltige Reststoff KS kann beispielsweise wiederum als Kaliumdünger verwertet werden.

Die vorgeschaltete Umkehrosmoseeinrichtung 34 hat bei diesem Ablauf des Verfahrens den Vorteil, dass das hier anfallende gereinigte Wasser direkt als Spülwasser SW für die Waschungsstufe 22 verwendet werden kann und somit an der Hydroxidfällungseinrichtung 38 und der Strippungseinrichtung 40 deutlich geringere Durchflussmengen behandelt werden müssen. Im Falle einer nicht ausreichenden Menge des auf diese Weise aufbereiteten Spülwassers SW kann auch hier bedarfsweise zusätzliches Frischwasser FW in die Waschungsstufe 22 gegeben werden.

Bei beiden Herstellungsverfahren gemäß den Ausführungsformen nach den Figuren 2 und 3 werden somit neben dem salzarmen Torfersatzstoff TE mehrere ebenfalls verwertbare Feststoffe über die Aufbereitungsanordnung 32 gewonnen.

Es wird darauf hingewiesen, dass alle oben beschriebenen Elemente und Merkmale der verschiedenen Ausführungsformen des erfindungsgemäßen Gegenstandes untereinander austauschbar beziehungsweise kombinierbar sind, sofern ein Austausch oder eine Kombination derselben aus technischen Gründen nicht ausgeschlossen ist.

## Patentansprüche

1. Verfahren zur Herstellung eines Torfersatzstoffes (TE) aus einer Faserstoffsuspension (FS), die Fasern aus nachwachsenden Rohstoffen enthält, wie insbesondere eine landwirtschaftliche Reststoffe (LR) enthaltende Faserstoffsuspension (FS), bei dem
in wenigstens einem ersten Feststoffabtrennungsschritt eine erste Feststofffraktion (FF1) von einem ersten Filtrat (F1) und in einem diesem nachgeschalteten zweiten Feststoffabtrennungsschritt eine zweite Feststofffraktion (FF2) von einem zweiten Filtrat (F2) getrennt wird,
in einem Hygienisierungsschritt die gewonnene Feststofffraktion (FF2) hygienisiert wird,
und nach dem Hygienisierungsschritt der Torfersatzstoff (TE) bereitgestellt wird,
wobei während des Verfahrens Säure (S) vor den beiden Feststoffabtrennungsschritten in einem Ansäuerungsschritt der Faserstoffsuspension (FS) zugegeben wird, um ausgefallene Salze zu lösen, nach dem Ansäuerungsschritt im ersten Feststoffabtrennungsschritt die erste Feststofffraktion (FF1) vom ersten Filtrat (F1) mit den darin gelösten Salzen getrennt wird und nach dem ersten Feststoffabtrennungsschritt ein Waschungsschritt erfolgt, bei dem die erste Feststofffraktion (FF1) mit Spülwasser (SW) vermischt wird
**dadurch gekennzeichnet, dass** das im ersten Feststoffabtrennungsschritt anfallende erste Filtrat (F1) in einem Aufbereitungsablauf aufbereitet und im Waschungsschritt als Spülwasser (SW) verwendet wird und der Hygienisierungsschritt den Feststoffabtrennungsschritten nachgeschaltet ist.

2. Verfahren nach Anspruch 1, **dadurch gekennzeichnet, dass** beim Ansäuerungsschritt ein pH-Wert der Faserstoffsuspension (FS) von 4 bis 6 eingestellt wird und die Säure (S) beim Ansäuerungsschritt durch Schwefelsäure gebildet ist.

3. Verfahren nach Anspruch 1 oder 2, **dadurch gekennzeichnet, dass** im Waschungsschritt die erste Feststofffraktion (FF1) mit der 2 bis 4-fachen Masse an Spülwasser (SW) vermischt wird.

4. Verfahren nach einem der Ansprüche 1 bis 3, **dadurch gekennzeichnet, dass** nach dem Waschungsschritt im zweiten Feststoffabtrennungsschritt die salzreduzierte zweite Feststofffraktion (FF2) vom zweiten Filtrat (F2) getrennt wird, das im Wesentlichen aus dem Spülwasser (SW) besteht und nach dem zweiten Feststoffabtrennungsschritt der Hygienisierungsschritt erfolgt, bei dem die salzreduzierte zweite Feststofffraktion (FF2) einer thermischen Behandlung unterzogen wird.

5. Verfahren nach Anspruch 4, **dadurch gekennzeichnet, dass** die salzreduzierte zweite Feststofffraktion (FF2) im Hygienisierungsschritt mit Dampf oder Heißluft beaufschlagt wird.

6. Verfahren nach einem der Ansprüche 1 bis 5, **dadurch gekennzeichnet, dass** die Faserstoffsuspension (FS) vor der Ansäuerung und den beiden Feststoffabtrennungsschritten einer Vorabtrennung unterzogen wird.

7. Verfahren nach einem der Ansprüche 1 bis 6, **dadurch gekennzeichnet, dass** das erste Filtrat (F1) im Aufbereitungsablauf mittels Umkehrosmose behandelt wird und vorzugsweise vor der Umkehrosmose durch eine Hydroxidfällung zur Ausfällung von Ca, Mg und/oder Phosphat behandelt wird.

8. Verfahren nach Anspruch 7, **dadurch gekennzeichnet, dass** das erste Filtrat (F1) im Aufbereitungsablauf zwischen der Hydroxidfällung und der Umkehrosmose nachgesäuert und vorzugsweise vor der Nachsäuerung zur Abtrennung von Stickstoff-Nebenprodukten gestrippt wird.

9. Anlage (2) zur Durchführung eines Verfahrens zur Herstellung des Torfersatzstoffes (TE) aus der Faserstoffsuspension (FS) nach einem der Ansprüche 1 bis 8 mit einer ersten Feststoffabtrennungsstufe (20) zur Durchführung des ersten Feststoffabtrennungsschrittes, einer zweiten Feststoffabtrennungsstufe (24) zur Durchführung des zweiten Feststoffabtrennungsschrittes und einer der zweiten Feststoffabtrennungsstufe 24 nachgeschalteten Hygienisierungsstufe (26) zur Durchführung des Hygienisierungsschrittes, wobei vor der ersten Feststoffabtrennungsstufe (20) eine Ansäuerungsstufe (6) zur Durchführung des Ansäuerungsschrittes mit einer Mischeinrichtung (4) zum Vermischen der Faserstoffsuspension (FS) mit der Säure (S) vorgesehen ist und der ersten Feststoffabtrennungsstufe (20) eine Waschungsstufe (22) zur Durchführung des Waschungsschrittes nachgeschaltet ist, **dadurch gekennzeichnet, dass** die erste Feststoffabtrennungsstufe (20) mit einer Aufbereitungsanordnung (32) verbunden ist, über die das erste Filtrat (F1) aufbereitbar ist.

10. Herstellungsanlage nach Anspruch 9, **dadurch gekennzeichnet, dass** die Mischeinrichtung (4) durch einen Rührbehälter und/oder ein Rohr mit Turbulenzerzeugungsmitteln gebildet ist und eine pH-Überwachung (18) aufweist.

11. Herstellungsanlage nach Anspruch 9 oder 10, **dadurch gekennzeichnet, dass** die erste Feststoffabtrennungsstufe (20) und die zweite Feststoffabtrennungsstufe (24) jeweils eine Schneckenpresse, eine Winkelpresse und/oder einen Wendelfilter aufweisen.

12. Herstellungsanlage nach einem der Ansprüche 9 bis 11, **dadurch gekennzeichnet, dass** die Hygienisierungsstufe (26) eine Dampfhygienisierungseinrichtung (28) und/oder eine Heißlufthygienisierungseinrichtung (30) aufweist.

13. Herstellungsanlage nach einem der Ansprüche 9 bis 12, **dadurch gekennzeichnet, dass** den beiden Feststoffabtrennungsstufen (20, 24) eine Vorabtrennungseinrichtung (10) zur Durchführung der Vorabtrennung vorgeschaltet ist.

14. Herstellungsanlage nach einem der Ansprüche 9 bis 13, **dadurch gekennzeichnet, dass** die Aufbereitungsanordnung (32) eine Umkehrosmoseeinrichtung (34) aufweist, der vorzugsweise eine Hydroxidfällungseinrichtung (38) vorgeschaltet ist.

15. Herstellungsanlage nach einem der Ansprüche 9 bis 14, **dadurch gekennzeichnet, dass** in der Aufbereitungsanordnung (32) zwischen der Hydroxidfällungseinrichtung (38) und der Umkehrosmoseeinrichtung (34) eine Nachsäuerungsstufe (42) zur pH-Absenkung des Filtrats und vorzugsweise vor der Nachsäuerungsstufe (42) eine Strippungseinrichtung (40) zur Abtrennung der Stickstoff-Nebenprodukte angeordnet ist.

## Claims

1. Method for producing a peat substitute (TE) from a fibre suspension (FS) containing fibres from renewable raw materials, such as, in particular, a fibre suspension (FS) containing agricultural residues (LR), in which
a first solids fraction (FF1) is separated from a first filtrate (F1) in at least a first solids separation step and a second solids fraction (FF2) is separated from a second filtrate (F2) in a second solids separation step downstream of the first solids separation step,
in a hygienisation step, the solids fraction (FF2) obtained is hygienised,
and the peat substitute (TE) is provided after the hygienisation step,
wherein during the method acid (S) is added to the fibre suspension (FS) in an acidification step before the two solids separation steps in order to dissolve precipitated salts, after the acidification step in the first solids separation step, the first solids fraction (FF1) is separated from the first filtrate (F1) with the salts dissolved therein, and after the first solids separation step a washing step takes place in which the first solids fraction (FF1) is mixed with rinsing water (SW)
**characterized in that** the first filtrate (F1) created in the first solids separation step is prepared in a treatment sequence and used as rinsing water (SW) in the washing step, and the hygienisation step is carried out downstream of the solids separation steps.

2. Method according to claim 1, **characterized in that** a pH value of the fibre suspension (FS) of 4 to 6 is set in the acidification step and the acid (S) in the acidification step is formed by sulphuric acid.

3. Method according to claim 1 or 2, **characterized in that** in the washing step the first solids fraction (FF1) is mixed with 2 to 4 times its mass in rinsing water (SW).

4. Method according to any one of claims 1 to 3, **characterized in that** after the washing step, in the second solids separation step, the salt-reduced second solids fraction (FF2) is separated from the second filtrate (F2), which consists substantially of the rinsing water (SW), and after the second solids separation step, the hygienisation step takes place, in which the salt-reduced second solids fraction (FF2) is subjected to a thermal treatment.

5. Method according to claim 4, **characterized in that** the salt-reduced second solids fraction (FF2) is exposed to steam or hot air in the hygienisation step.

6. Method according to any one of claims 1 to 5, **characterized in that** the fibre suspension (FS) is subjected to pre-separation prior to the acidification and the two solids separation steps.

7. Method according to any one of claims 1 to 6, **characterized in that** the first filtrate (F1) is treated by means of reverse osmosis in the treatment sequence and is preferably treated by hydroxide precipitation to precipitate Ca, Mg and/or phosphate before the reverse osmosis.

8. Method according to claim 7, **characterized in that** the first filtrate (F1) is post-acidified in the treatment sequence between the hydroxide precipitation and the reverse osmosis and preferably stripped before the post-acidification to separate nitrogen byproducts.

9. Plant (2) for performing a method for producing the peat substitute (TE) from the fibre suspension (FS) according to any one of claims 1 to 8, with a first solids separation stage (20) for performing the first solids separation step, a second solids separation stage (24) for performing the second solids separation step and a hygienisation stage (26) downstream of the second solids separation stage (24) for performing the hygienisation step, wherein an acidification stage (6) for performing the acidification step with a mixing apparatus (4) for mixing the fibre suspension (FS) with the acid (S) is provided upstream of the first solids separation stage (20), and a washing stage (22) for performing the washing step is provided downstream of the first solids separation stage (20), **characterized in that** the first solids separation stage (20) is connected to a treatment arrangement (32) by which the first filtrate (F1) can be prepared.

10. Production plant according to claim 9, **characterized in that** the mixing apparatus (4) is formed by an agitator vessel and/or a tube with turbulence generating means and has a pH monitor (18).

11. Production plant according to claim 9 or 10, **characterized in that** the first solids separation stage (20) and the second solids separation stage (24) each have a screw press, an angle press and/or a spiral filter.

12. Production plant according to any one of claims 9 to 11, **characterized in that** the hygienisation stage (26) has a steam hygienisation apparatus (28) and/or a hot air hygienisation apparatus (30).

13. Production plant according to any one of claims 9 to 12, **characterized in that** a pre-separation apparatus (10) for performing the pre-separation is provided upstream of the two solids separation stages (20, 24).

14. Production plant according to any one of claims 9 to 13, **characterized in that** the treatment arrangement (32) has a reverse osmosis apparatus (34) upstream of which a hydroxide precipitation apparatus (38) is preferably provided.

15. Production plant according to any one of claims 9 to 14, **characterized in that** a post-acidification stage (42) for lowering the pH of the filtrate is arranged in the treatment arrangement (32) between the hydroxide precipitation apparatus (38) and the reverse osmosis apparatus (34), and a stripping apparatus (40) for separating the nitrogen byproducts is preferably arranged upstream of the post-acidification stage (42).

## Revendications

1. Procédé de fabrication d'une matière de substitution de tourbe (TE) à partir d'une suspension de matière fibreuse (FS) qui contient des fibres provenant de matières premières renouvelables, comme en particulier une suspension de matière fibreuse (FS) contenant des résidus agricoles (LR), dans lequel
dans au moins une première étape de séparation de matières solides, une première fraction de matières solides (FF1) est séparée d'un premier filtrat (F1) et, dans une seconde étape de séparation de matières solides en aval de celle-ci, une seconde fraction de matières solides (FF2) est séparée d'un second filtrat (F2),
dans une étape d'hygiénisation, la fraction de matières solides (FF2) obtenue est hygiénisée,
et, après l'étape d'hygiénisation, la matière de substitution de tourbe (TE) est préparée,
dans lequel, pendant le procédé, de l'acide (S) est ajouté à la suspension de matière fibreuse (FS) avant les deux étapes de séparation de matières solides dans une étape d'acidification pour dissoudre des sels précipités, après l'étape d'acidification, dans la première étape de séparation de matières solides, la première fraction de matières solides (FF1) est séparée du premier filtrat (F1) avec les sels qui y sont dissous, et une étape de lavage est effectuée après la première étape de séparation de matières solides, dans laquelle la première fraction de matières solides (FF1) est mélangée à de l'eau de rinçage (SW),
**caractérisé en ce que** le premier filtrat (F1) obtenu dans la première étape de séparation de matières solides est préparé dans une séquence de préparation et utilisé en tant qu'eau de rinçage (SW) dans l'étape de lavage et l'étape d'hygiénisation est placée en aval des étapes de séparation de matières solides.

2. Procédé selon la revendication 1, **caractérisé en ce que** dans l'étape d'acidification, une valeur pH de la suspension de matière fibreuse (FS) de 4 à 6 est réglée et l'acide (S) dans l'étape d'acidification est formé par de l'acide sulfurique.

3. Procédé selon la revendication 1 ou 2, **caractérisé en ce que**, dans l'étape de lavage, la première fraction de matières solides (FF1) est mélangée avec 2 à 4 fois la masse d'eau de rinçage (SW).

4. Procédé selon l'une quelconque des revendications 1 à 3, **caractérisé en ce qu'**après l'étape de lavage, dans la seconde étape de séparation de matières solides, la seconde fraction de matières solides réduite en sel (FF2) est séparée du second filtrat (F2), qui est sensiblement constitué de l'eau de rinçage (SW), et après la seconde étape de séparation de matières solides, l'étape d'hygiénisation est effectuée, dans laquelle la seconde fraction de matières solides réduite en sel (FF2) est soumise à un traitement thermique.

5. Procédé selon la revendication 4, **caractérisé en ce que** la seconde fraction de matières solides réduite en sel (FF2) est sollicitée avec de la vapeur ou de l'air chaud dans l'étape d'hygiénisation.

6. Procédé selon l'une quelconque des revendications 1 à 5, **caractérisé en ce que** la suspension de matière fibreuse (FS) est soumise à une préséparation avant l'acidification et les deux étapes de séparation de matières solides.

7. Procédé selon l'une quelconque des revendications 1 à 6, **caractérisé en ce que** le premier filtrat (F1) est traité par osmose inverse dans la séquence de préparation et est de préférence traité par une précipitation d'hydroxyde avant l'osmose inverse pour la précipitation de Ca, Mg et/ou phosphate.

8. Procédé selon la revendication 7, **caractérisé en ce que** le premier filtrat (F1) est post-acidifié dans la séquence de préparation entre la précipitation d'hydroxyde et l'osmose inverse et est de préférence strippé avant la post-acidification pour la séparation de produits secondaires azotés.

9. Installation (2) pour la mise en œuvre d'un procédé de fabrication de la matière de substitution de tourbe (TE) à partir de la suspension de matière fibreuse (FS) selon l'une quelconque des revendications 1 à 8, avec un premier étage de séparation de matières solides (20) pour la mise en œuvre de la première étape de séparation de matières solides, un second étage de séparation de matières solides (24) pour la mise en œuvre de la seconde étape de séparation de matières solides et un étage d'hygiénisation (26) en aval du second étage de séparation de matières solides (24) pour la mise en œuvre de l'étape d'hygiénisation, dans laquelle un étage d'acidification (6) est prévu avant le premier étage de séparation de matières solides (20) pour la mise en œuvre de l'étape d'acidification avec un appareil de mélange (4) pour le mélange de la suspension de matière fibreuse (FS) avec l'acide (S) et un étage de lavage (22) est placé en aval du premier étage de séparation de matières solides (20) pour la mise en œuvre de l'étape de lavage, **caractérisée en ce que** le premier étage de séparation de matières solides (20) est connecté à un agencement de préparation (32) par l'intermédiaire duquel le premier filtrat (F1) peut être préparé.

10. Installation de fabrication selon la revendication 9, **caractérisée en ce que** l'appareil de mélange (4) est formé par un récipient d'agitation et/ou un tuyau avec des moyens de génération de turbulence et présente une surveillance du pH (18).

11. Installation de fabrication selon la revendication 9 ou 10, **caractérisée en ce que** le premier étage de séparation de matières solides (20) et le second étage de séparation de matières solides (24) présentent respectivement une presse à vis, une presse à angle et/ou un filtre hélicoïdal.

12. Installation de fabrication selon l'une quelconque des revendications 9 à 11, **caractérisée en ce que** l'étage d'hygiénisation (26) présente un appareil d'hygiénisation à la vapeur (28) et/ou un appareil d'hygiénisation à l'air chaud (30).

13. Installation de fabrication selon l'une quelconque des revendications 9 à 12, **caractérisée en ce que** les deux étages de séparation de matières solides (20, 24) sont placés en aval d'un appareil de préséparation (10) pour la mise en œuvre de la préséparation.

14. Installation de fabrication selon l'une quelconque des revendications 9 à 13, **caractérisée en ce que** l'agencement de préparation (32) présente un appareil d'osmose inverse (34), qui est de préférence placé en aval d'un appareil de précipitation d'hydroxyde (38).

15. Installation de fabrication selon l'une quelconque des revendications 9 à 14, **caractérisée en ce que**, dans l'agencement de préparation (32), un étage de post-acidification (42) pour l'abaissement du pH du filtrat est disposé entre l'appareil de précipitation d'hydroxyde (38) et l'appareil d'osmose inverse (34) et de préférence un appareil de strippage (40) pour la séparation des produits secondaires azotés est disposé avant l'étage de post-acidification (42).
